## Europäisches Patentamt

## European Patent Office

## Office européen des brevets

(11) Numéro de publication: **0 293 278**
**B1**

(12) **FASCICULE DE BREVET EUROPEEN**

(45) Date de publication du fascicule du brevet: **23.01.91**

(51) Int. Cl.⁵: **F 02 F 1/24,** F 02 F 1/42,
F 01 L 1/26, F 01 L 1/04,
F 01 L 1/18

(21) Numéro de dépôt: **88401055.4**

(22) Date de dépôt: **29.04.88**

(54) Culasse multisoupapes pour moteur à combustion interne.

(30) Priorité: **29.05.87 FR 8707571**

(43) Date de publication de la demande:
**30.11.88 Bulletin 88/48**

(45) Mention de la délivrance du brevet:
**23.01.91 Bulletin 91/04**

(84) Etats contractants désignés:
**DE ES GB IT SE**

(56) Documents cités:
**DE-A-3 615 967**
**FR-A- 872 885**
**FR-A-1 248 497**
**FR-A-1 550 597**
**FR-A-2 453 280**
**GB-A- 467 320**
**GB-A- 539 750**
**US-A-2 804 862**
**US-A-4 617 896**

(73) Titulaire: **REGIE NATIONALE DES USINES
RENAULT
Boîte postale 103 8-10 avenue Emile Zola
F-92109 Boulogne-Billancourt (FR)**

(72) Inventeur: **Garro, Denis
20, rue des Murs Blancs
F-78510 Triel sur Seine (FR)**

Courier Press, Leamington Spa, England.

**Description**

La présente invention se rapporte aux moteurs modernes à combustion interne et vise plus particulièrement une culasse multisoupapes bien adaptée à ceux-ci (US-A-4,617,896).

Du fait de la tendance aux "capots moteurs plongeants" imposée par les bureaux de style carrosserie, il convient de concevoir des culasses de moteur qui présentent une hauteur la plus réduite possible, surtout dans le cas d'une culasse à plusieurs soupapes par cylindre, montée sur un moteur installé transversalement dans le compartiment moteur. La "garde au capot" minimale se retrouve alors au niveau de la poulie de distribution, vers l'avant du véhicule.

Pour augmenter l'agrément de conduite, les moteurs doivent fournir plus de couple à faible régime, ce qui amène à allonger les conduits d'admission qui se logent alors difficilement dans les compartiments moteur de plus en plus exigus.

Dans le cas de moteurs à injection indirecte, il est nécessaire de placer judicieusement les injecteurs le plus près possible des soupapes d'admission pour éviter notamment les effets de mouillage de parois qui provoquent des instabilités de fonctionnement à charges partielles, de mauvais démarrages à froid et augmentent la pollution due aux résidus de combustion.

Il est toujours recherché, pour réaliser une culasse, de simplifier au maximum le montage de ses différents composants de manière à automatiser totalement celui-ci, et de réduire aussi les opération d'usinage pour diminuer les coûts de fabrication.

L'invention se propose de résoudre ces problèmes existants précités.

A cet effet, elle a pour objet, une culasse du type à injection indirecte, à arbres à cames en tête et à longs conduits d'admission qui est caractérisé, suivant une particularité essentielle, en ce que les axes longitudinaux des culbuteurs respectifs d'admission et d'échappement sont intercalés chacun entre un axe longitudinal d'arbre à cames et une soupape, ces quatre axes étant contenus dans une même plan qui sépare cette culasse d'une plaque carter chapeaux.

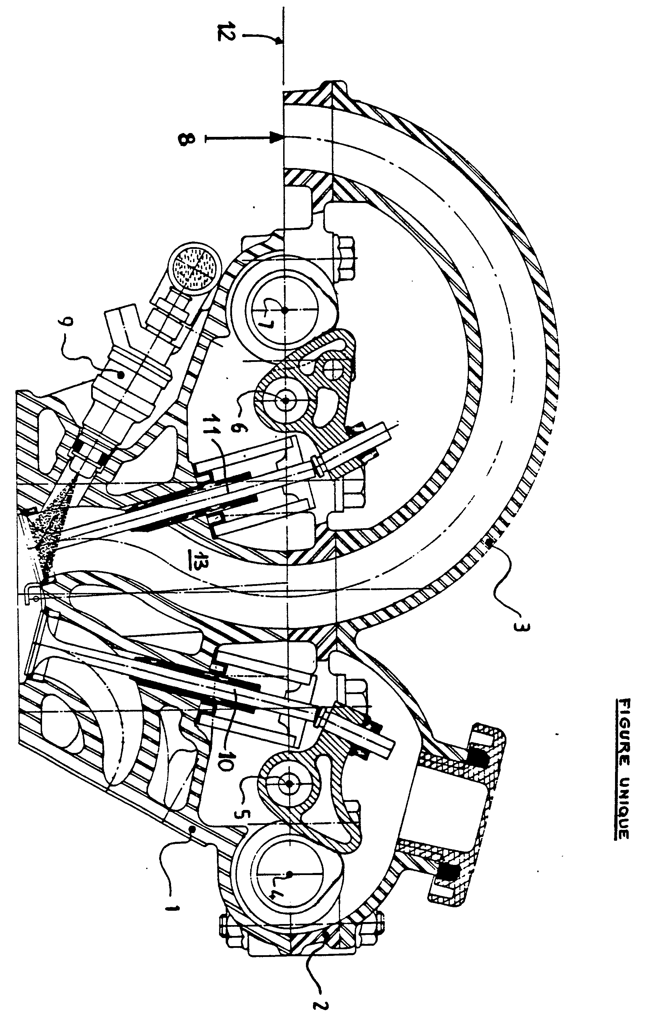

D'autres particularités ressortiront plus clairement à la lecture de la description qui suit d'un mode de réalisation préféré, donné à titre d'exemple non limitatif, en référence à la figure unique annexée qui représente une vue en coupe transversale d'une culasse conforme à l'invention.

Comme illustré sur cette figure, cette culasse 1 à quatre soupapes par cylindre et à injection indirecte d'essence présente un certain nombre d'originalités dans l'agencement de ses éléments constitutifs.

Cette culasse est surmontée d'une plaque carter chapeaux 2 et d'un couvre-culasse 3. Elle comporte notamment:

deux arbres à cames d'admission et d'échappement dont les axes longitudinaux sont respectivement référencés 7 et 4;

deux axes respectifs 6 et 5 de culbuteurs d'admission et d'échappement;

des soupapes d'admission 11 et d'échappement 10;

des injecteurs d'essence 9;

et des pipes d'admission 13;

Ces arbres à cames sont positionnés "à l'extérieur" des soupapes et placés relativement bas pour remédier au problème de hauteur hors tout culasse (garde du capot/poulie de distribution).

Pour simplifier le montage de cette culasse et diminuer le nombre des usinages, les axes longitudinaux 7 et 4 d'arbres à cames et les axes longitudinaux 6 et 5 de culbuteurs sont contenus dans un même plan 12. Ce plan constitue un plan de séparation entre la culasse 1 et la plaque carter chapeaux 2 qui assure une "fonction" de demi-paliers supérieurs d'arbres à cames et axes de culbuteurs.

Pour obtenir des conduits d'admission longs mais facilement logeables dans de petits compartiments moteur, les pipes d'admission 13 sortent verticalement par le dessus de la culasse et sont partiellement intégré dans le couvre-culasse 3. Le volume occupé par ce système d'admission est moindre que celui d'un système conventionnel à débouché latéral. Ce couvre-culasse en venant coiffer la plaque carter chapeaux, assure une "fonction" de collecteur partiel d'admission, le collecteur d'admission se raccordant alors suivant la flèche 8.

La zone laissée libre par la pipe d'admission 13 est occupée alors par un injecteur d'essence 9 qui se trouve ainsi au plus près de la soupape d'admission 11.

Cette disposition permet également de supprimer l'usinage nécessaire à la liaison culasse-collecteur d'admission.

**Revendications**

1. Culasse multisoupapes pour moteur à combustion interne, du type à injection indirecte, à arbres à cames en tête et à longs conduits d'admission, caractérisée en ce que, pour réduire au maximum la hauteur de cette culasse (1), les axes longitudinaux (6, 5) des culbuteurs respectifs d'admission et d'échappement sont intercalés chacun entre un axe longitudinal (7, 4) d'arbres à cames et une soupape (11, 10), ces quatre axes (4 à 7) étant contenus dans un même plan (12) qui sépare cette culasse d'une plaque carter chapeaux (2).

2. Culasse suivant la revendication 1, caractérisée en ce que les pipes d'admission (13) sortent verticalement par le dessus de la culasse (1) et sont partiellement intégrées à un couvre culasse (3) reposant sur cette plaque carter chapeaux (2).

3. Culasse suivant la revendication 1 ou 2, caractérisée en ce que des injecteurs d'essence (9) sont disposés au-dessous de cet arbre à cames d'admission (7), ces culbuteurs d'admission (6) et ces soupapes d'admission (11), au plus près de ces dernières.

## Patentansprüche

1. Multiventil-Zylinderkopf für eine Brennkraftmaschine mit indirekter Einspritzung, mit oben liegender Nockenwelle und mit langen Einlaßleitungen, dadurch gekennzeichnet, daß zur maximalen Verringerung der Bauhöhe des Zylinderkopfes (1) die Längsachsen (6, 5) der Kipphebel für den Einlaß bzw. für den Auslaß jeweils zwischen einer Längsachse (7, 4) der Nockenwellen und einem der Ventile (11, 10) angeordnet sind, wobei diese vier Achsen (4 bis 7) in derselben Ebene (12) angeordnet sind, welche den Zylinderkopf von einem Zylinderkopfdeckel (2) trennt.

2. Zylinderkopf nach Anspruch 1, dadurch gekennzeichnet, daß die Einlaßleitungen (13) senkrecht nach oben aus dem Zylinderkopf (1) austreten und teilweise in eine Abdeckung (3) integriert sind, die sich auf dem Zylinderkopfdeckel (2) abstützt.

3. Zylinderkopf nach Ansprüchen 1 oder 2, dadurch gekennzeichnet, daß die Einspritzdüsen (9) unterhalb der Einlaßnockenwelle (7) der Kipphebel (6) für den Einlaß und der Einlaßventile (11) möglichst nahe bei letzteren angeordnet sind.

## Claims

1. A multi-valve cylinder head for internal combustion engines, of the indirect injection type, with overhead cam shafts and with long induction manifolds, characterised in that in order to reduce as far as possible the height of the cylinder head (1) the longitudinal axes (6, 5) of the respective inlet and exhaust rocker arms are each incorporated between a longitudinal cam shaft axis (7, 4) and a valve (11, 10), these four axes (4 to 7) being contained in one and the same plane (12) which separates the said cylinder head from a rocker cover (2).

2. A cylinder head according to Claim 1, characterised in that the intake pipes (13) emerge vertically above the cylinder head (1) and in that they are partially integrated into a cylinder head cover (3) resting on the said rocker cover (2).

3. A cylinder head according to Claim 1 or 2, characterised in that the petrol injectors (9) are disposed below the said intake cam shaft (7), these intake rockers (6) and intake valves (11), being at most close to these latter.

FIGURE UNIQUE